# EUROPEAN PATENT APPLICATION

(11) **EP 4 243 410 A1**
(43) Date of publication of application: **13.09.2023**
(21) Application number: 22161282.3
(22) Date of filing: 10.03.2022
(51) Int. Cl.: H04N 7/18, B60R 1/00, G06F 11/07, H04N 5/232, G05D 1/00

(54) **METHOD FOR SAFETY MONITORING OF A COMMUNICATION NETWORK OF AN AUTOMATED VEHICLE, AND COMMUNICATION NETWORK**

(71) Applicant: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(57) **Abstract**

Provided is a method for safety monitoring of a communication network of an automated vehicle, wherein the communication network comprises a sensor device connected via a serdes module to a first microcontroller. The method comprises sending a first data frame captured by the sensor device from the sensor device via the serdes module to the first microcontroller, processing the received first data frame at the first microcontroller, sending an information about a hardware error occurred in the sensor device and/or the serdes module from the serdes module to the first microcontroller, and performing a safety check triggered by the received information about the hardware error using the first microcontroller during processing the first data frame.

## Description

The present disclosure is directed to a method for safety monitoring of a communication network of an automated vehicle, a communication network configured to carry out the method, and an automated vehicle comprising the communication network.

Vehicles and specifically cars or trucks may be equipped with one or more cameras. The camera may be connected to an electric control unit (ECU) for processing of the video data. Such camera-ECU may be of the LVDS (Low Voltage Differential Signaling) type. Furthermore, the video data from the camera may be transmitted to the ECU by a cable of the PoC (Power over Coax) or STP (Single Twisted Pair) type. Thus, the video data from the camera are transmitted serially to the ECU. This requires a serializer on the camera side and a deserializer on the ECU side.

In CN104980645A a camera is described, wherein the camera comprises a serializer and an image sensing module. The serializer is connected to a low voltage differential signal cable, and the serializer receives a control signal through the low voltage differential signal cable. The image sensing module is coupled to the serializer and is used for sensing an automobile surrounding according to the control signal, generating an image signal and transmitting the image signal to the serializer. When transmitting the image signal to the serializer, the image sensing module serializes the image signal into a sequence signal and outputs the sequence signal through the low voltage differential signal cable.

CN211296797U is directed to a vehicle camera device and a vehicle control device. The vehicle camera device comprises a first camera, a first serializer, a second camera, a second serializer, a first deserializer, a processor and a third serializer, wherein the first serializer is connected to the first camera, the second serializer is connected to the second camera, the first serializer and the second serializer are both connected to the first deserializer, the first deserializer is connected to the third serializer, and the processor is connected to the first deserializer. Provided are a vehicle imaging device and a vehicle control device. Due to the fact that the processor is arranged, when two or more than two cameras are configured, the cameras are configured. The processor can select control instruction according to a signal of the control unit to determine which camera outputs data; according to the vehicle-mounted camera device, pictures can be switched among different cameras, data output by the vehicle camera device is the same as that output by a single camera, and a control unit does not need to be upgraded, so that the vehicle-mounted camera device comprises a plurality of cameras, and the upgrading period of the vehicle-mounted camera device is short.

US10343606B2 is directed to a camera system for a vehicle that includes a camera unit having a serializer and a control unit having a deserializer connected to the serializer is provided. The deserializer includes a plurality of data contacts for parallel data output. One or more of the data contacts are data contact general purpose inputs/outputs (GPIO) pins that communicate with GPIO pins of a data processing unit of the control unit.

More specifically, the camera system of US10343606B2 comprises a camera unit which is connected to a control unit, herein also called ECU. Both units are connected via a serial connection. The camera unit includes a video sensor. The video sensor provides a parallel video signal via parallel data lines, which means a plurality of single data lines. The respective video signal is input to a serializer of the camera unit. The serializer has respective input pins (also called data contacts) for the video signal. Furthermore, the serializer includes an input HSYNC for a horizontal synchronization signal HS, an input VSYNC for a vertical synchronization signal VS and an input PCLKIN for a pixel clock signal PCLK. Additionally, the serializer has four general purpose input/output pins. Thus, the serializer can receive video data and optionally synchronization signals and a clock as well as other control signals via the GPIOs. The serializer processes these signals to a serial signal transmittable via the serial connection to the control unit. The control unit includes a deserializer to deserialize the serial signal received from the camera unit. Therefore, the deserializer has a plurality of data pins or contacts. Furthermore, the deserializer has outputs HSYNC, VSYNC and PCLK as well as four GPIOs. The desirializer delivers signals/data to a video processor, i.e., a first micro control unit/microcontroller, and a second microcontroller. Therefore, the video processor has a corresponding number of data pins/data contacts for receiving the data signals from respective data lines from the deserializer. Furthermore, the video processor has respective dedicated GPIOs (four in the present case) in order to receive respective signals from the GPIOs of the deserializer. The microcontroller also has several dedicated GPIOs for exchanging signals with the respective GPIOs of the deserializer.

In camera systems like the one described above with respect to US10343606B2 the video processor performs a safety check with respect to the video data received from the deserializer and the second microcontroller, also called safety SoC, performs a safety check with respect to a hardware error that occurred in the camera and/or the serializer/deserializer module. In case a hardware error is detected at the second microcontroller, the second microcontroller either stops the video data processing at the video processor directly or enters registers of the camera and/or the serializer/deserializer module to identify which error occurred and then stops the video data processing at the video processor if necessary.

The drawback of the above described state of the art is that the error processing at the second microcontroller and thus the stop of the video data processing at the video processor often takes too long such that too many optionally corrupted video frames are processed by the video processor and the whole system must be shut down and newly started. This may lead to a downtime of several minutes.

In the light of this prior art, the object of the present disclosure is to provide a device and/or a method being suitable for overcoming at least the above-mentioned disadvantage of the prior art, respectively.

The object is solved by the features of the independent claims. The dependent claims have preferred further embodiments of the disclosure as their subject matter.

More specifically, a method for safety monitoring of a communication network of an automated vehicle is provided, wherein the communication network comprises a sensor device connected via a serdes module to a first microcontroller.

A serializer/deserializer (SerDes or serdes module) is a pair of functional blocks commonly used in high speed communications to compensate for limited input/output. These blocks convert data between serial data and parallel interfaces in each direction. The primary use of a SerDes is to provide data transmission over a single line or a differential pair in order to minimize the number of I/O pins and interconnects.

The term microcontroller as used herein may be understood as a small computer on a single metal-oxide-semiconductor (MOS) integrated circuit (IC) chip. A microcontroller contains one or more CPUs (processor cores) along with memory and programmable input/output peripherals. Program memory in the form of ferroelectric RAM, NOR flash or OTP ROM may be included on the chip, as well as a RAM. Microcontrollers are designed for embedded applications, in contrast to the microprocessors used in personal computers or other general purpose applications consisting of various discrete chips.

The first microcontroller may be or may comprise a system-on-a-chip (SoC). A system on a chip is an integrated circuit (also known as a "chip") that integrates all or most components of a computer or other electronic system. These components may include a central processing unit (CPU), a memory, input/output ports and/or a secondary storage, optionally alongside other components such as a graphics processing unit (GPU) - all on a single substrate or microchip. The SoC may contain digital and/or analog signal processing functions. SoCs are in contrast to the common traditional motherboard-based PC architecture, which separates components based on function and connects them through a central interfacing circuit board. Whereas a motherboard houses and connects detachable or replaceable components, SoCs integrate all of these components into a single integrated circuit. That is, the SoC may include the first microcontroller (as one of its components) together with peripherals like a graphics processing unit (GPU), a Wi-Fi module, and/or one or more coprocessors.

The term safety may understood as functional safety, wherein functional safety is the part of the overall safety of the communication system, especially the camera and/or the serdes module, that depends on an automatic protection system operating correctly in response to its inputs in a predictable manner (fail-safe). The automatic protection system should be designed to properly handle hardware failures/errors. Functional safety requirement are for example included in ISO 26262. ISO 26262, titled "Road vehicles - Functional safety", is an international standard for functional safety of electrical and/or electronic systems that are installed in serial production road vehicles (excluding mopeds), defined by the International Organization for Standardization (ISO) in 2011, and revised in 2018. The standard aims to address possible hazards caused by the malfunctioning behaviour of electronic and electrical systems in vehicles. Although entitled "Road vehicles - Functional safety" the standard relates to the functional safety of electrical and ewlectronic systems as well as that of systems as a whole or of their mechanical subsystems.

The term communication network as used herein may relate to a system comprising several modules connected to each other via a data/signal line and configured to exchange data/signals using the data/signal line.

The method comprises sending a first data frame captured by the sensor device from the sensor device via the serdes module to the first microcontroller, and processing the received first data frame at the first microcontroller.

The method further comprises sending an information about a hardware error occurred in the sensor device and/or the serdes module from the serdes module to the first microcontroller, and performing a safety check triggered by the received information about the hardware error using the first microcontroller during processing the first data frame.

The hardware error may be a voltage drop and/or a voltage exceeding a predefined threshold at the camera and/or the serdes module. The hardware error may be an error occurred in the ram of the serdes module. The hardware error may be called chip error. In general, the term error may comprise any malfunction of the serdes module and/or the camera, wherein the term hardware may includes some or all of the physical parts of the serdes module and/or the camera.

That is, according to the method the microcontroller which processes the sensor data also/additionally receives the information about the hardware error. i.e., the video processor receives the hardware error of the camera and/or serdes module directly and not like in the state of the art via a safety SoC. Therefore time delays of reacting to the reported hardware error may be reduced.

In the following, the above described method is described further in detail.

Performing the safety check may comprise reading registers of the sensor device and/or the serdes module using the first microcontroller to specify the occurred hardware error.

That is, the information about the hardware error may a digital information, i.e., may solely indicate that any hardware error was detected in the serdes module and/or the camera. In order to figure out what kind of hardware error occurred in the serdes module and/or the camera, the first microcontroller may enter respective registers of the serdes module and/or the camera, read the information stored in these registers and defined the occurred hardware error.

Reading the registers of the sensor device and/or the serdes module using the first microcontroller may comprise sending a read request via a control channel from the first microcontroller to the sensor device and/or the serdes module, and sending data stored in the registers of the sensor device and/or the serdes module via the control channel to the first microcontroller in response to the read request.

The control channel may use a serial communication protocol and the registers may be part of a serial communication interface for the control channel.

More specifically, the control channel may be a 12C bus and the interface may be a 12C interface. I2C (Inter-Integrated Circuit, eye-squared-C), alternatively known as IIC, is a synchronous, multi-controller/multi-target (controller/target), packet switched, single-ended, serial communication bus. It is widely used for attaching lower-speed peripheral ICs to processors and microcontrollers in short-distance, intra-board communication. The I2C standard may allow the first microcontroller to communicate directly with a deserializer module of the serdes mdoule and indirectly via the deserializer module (e.g., using so-called clock stretching) with the camera and a serializer module of the serdes module. However, the disclosure is not limited to I2C, but other standards may be used.

The registers may be read after the first data frame is fully received.

The method may comprise sending a second data frame captured by the sensor device after the first data frame from the sensor device via the serdes module to the first microcontroller.

That is, subsequently to sending the first data frame a second data frame may be sent from the sensor device to the first microcontroller.

The first microcontroller may block processing of the received second data frame when the information about the hardware error is received at the first microcontroller or depending on a result of the safety check.

That is, since the first microcontroller, which may be called computer vision microcontroller, performs both, the processing of the sensor data as well as the (functional) safety check, the time between the hardware error is received at the microcontroller side and the stop of the sensor data processing may be reduced such that processing of corrupter sensor data frames may be avoided. Therefore, a downtime of the communication network may be reduced.

The communication network may comprise a second microcontroller connected to the first microcontroller. The description given above with respect to the first microcontroller applies mutatis mutandis to the second microcontroller and vice versa. The method may further comprise reporting the hardware error from the first microcontroller to the second microcontroller.

The second microcontroller may have a higher automotive safety integrity level than the first microcontroller.

The automotive safety integrity level (ASIL) is a risk classification scheme defined by the above mentioned ISO 26262 - Functional Safety for Road Vehicles standard. This is an adaptation of the Safety Integrity Level (SIL) used in IEC 61508 for the automotive industry. This classification helps defining the safety requirements necessary to be in line with the ISO 26262 standard. The ASIL is established by performing a risk analysis of a potential hazard by looking at the Severity, Exposure and Controllability of the vehicle operating scenario. The safety goal for that hazard in turn carries the ASIL requirements. There are four ASILs identified by the standard: ASIL A, ASIL B, ASIL C, ASIL D. ASIL D dictates the highest integrity requirements on the product and ASIL A the lowest. Hazards that are identified as QM (see below) do not dictate any safety requirements.

The second microcontroller may be connected to the first microcontroller via a serial peripheral interface.

For reporting the error to the second microcontroller, which may also be called safety SoC (see above), an SPI interface may be used. The Serial Peripheral Interface (SPI) is a synchronous serial communication interface specification used for short-distance communication, primarily in embedded systems. SPI devices communicate in full duplex mode using a master-slave architecture usually with a single master. The master (controller) device originates the frame for reading and writing.

The method may comprise reporting the hardware error received at the second microcontroller from the second microcontroller to the automated vehicle.

The second microcontroller may restart the communication network, i.e., may boot the camera and the first microcontroller, and initialize the registers of the communication interfaces depending on the kind of hardware error.

The information about the hardware error occurred in the sensor device may be sent via a first pin to the first microcontroller and the information about the hardware error occurred in the serdes module may be sent via a second pin to the first microcontroller. That is, the deserializer module may comprise different pins for the sensor device error and the serdes module error.

Sending the first data frame captured by the sensor device from the sensor device via the serdes module to the first microcontroller may comprise output the first data frame as parallel data from the sensor device to a serializer module of the serdes module, receive the first data frame at the serializer module, serialize the received first data frame at the serializer module, send the serialized first data frame from the serializer module to a deserializer module of the serdes module, deserialize the received serialized first data frame at the deserialzer module, and output the deserialzed first data frame to the microcontroller.

The serializer module may be part of the sensor device and the deserializer may be part of an electronic control unit comprising the first microcontroller. The electronic control unit may additionally comprise the second microcontroller.

An electronic control unit (ECU), also known as an electronic control module (ECM), is an embedded system in automotive electronics that controls one or more of the electrical systems or subsystems in a car or other motor vehicle. Modern vehicles have many ECUs, and these can include some or all of the following: engine control module (ECM), powertrain control module (PCM), transmission control module (TCM), brake control module (BCM or EBCM), central control module (CCM), central timing module (CTM), general electronic module (GEM), body control module (BCM), and suspension control module (SCM). These ECUs together are sometimes referred to collectively as the car's computer though technically they are all separate computers, not a single one. Sometimes an assembly incorporates several individual control modules (a PCM often controls both the engine and the transmission). The ECU comprising the first microcontroller may be configured to control functions relevant to a driving behavior of the vehicle, such as an engine control system, a power transmission, a braking system and/or a tire pressure control system. Additionally or alternatively, one, some or all driver assistance systems of the automated vehicle such as parking assistant, adaptive cruise control, lane departure warning, lane change assistant, traffic sign recognition, light signal recognition, approach assistant, night vision assistant, intersection assistant, and/or many others may be controlled by the microcontroller and/or the ECU.

The sensor device may comprise an image sensor configured to capture image data and the first data frame may comprise the image data captured by the image sensor.

That is, the sensor device may be or may comprise a camera, optionally a video camera, capturing image and sending the captured image data as part of the data frame(s) via the serdes module to the first microcontroller. The image sensor may be a video sensor. The camera may installed inside or outside the vehicle. The sensor device may comprise more than one camera. The sensor device is not limited to cameras and also other kind of sensors may be used.

The above described may be summarized in other words and with respect to more concrete but not limiting implementation of the disclosure as follows.

In case there are multiple ECUs which are sending the data from one ECU to the other ECU using some SOCs, it may happen that the serdes, i.e. serializer and deserializer does not provide the data without manipulation to the SOC. The Basic principle here is to allow the imager to send its 'Health Information' without any modification by the serdes directly to the SOC. The serdes will inform its own error (if any) by using a different pin, this pin is also connected to the SOC. The SOC will recieve two different types of errors, i.e., imager 'Health Information' and serdes chip 'Error'. In case of any error in the system, the SOC needs to control or stop the MIPI data coming from deserializer. The SOC could control the deserializer via I2C Protocol. The SOC will read the I2C registers of deserializer as the data frame is completely received by the SOC. The SOC than provides a signal via an additional port to any connected secondary SOC or ECU in the data chain. The additional port to secondary SOC will be connected to the first SOC via SPI. The error from the first SOC will be reported to second SOC or ECU which may have higher safety integrity to ensure that no data corruption or error is not detected. Hence, for the complete path from imager to serdes to first SOC and later to second SOC or second ECU, a higher safety integrity is achieved.

Furthermore a communication network is provided. The communication network comprises a sensor device connected via a serdes module to a microcontroller. The communication network is configured to carry out the above described method.

The microcontroller may be or may be part of an (intelligent) processor-controlled unit that can, optionally, communicate with other modules, optionally via a central gateway (CGW). The microcontroller can form part of the vehicle's onboard network comprising fieldbuses such as CAN bus, LIN bus, MOST bus and/or FlexRay or automotive Ethernet, optionally together with a telematics control unit.

Moreover, the description given above with respect to the method applies mutatis mutandis to the communication network and vice versa.

Furthermore, an automated vehicle comprising the above described communication network is provided.

The vehicle may be an automobile, e.g., a car. The automated vehicle can be configured to take over lateral and/or longitudinal guidance of the automated vehicle at least partially and/or temporarily during automated driving. To do so, inter alia the sensor data of the above-described sensor device may be used. The microcontroller may be configured to control, directly and/or indirectly, the automated driving at least partly.

The automated driving may be such that the driving of the vehicle is (largely) autonomous.

The vehicle may be a vehicle of autonomy level 1, i.e., the driver takes over the dynamic driving task, even if supporting systems (e.g., anti-lock braking system (ABS) and/or electronic stability control ESP) are available.

The vehicle may be a vehicle of autonomy level 1, i.e., have certain driver assistance systems that support the driver in vehicle operation, for example adaptive cruise control (ACC).

The vehicle can be a vehicle of autonomy level 2, i.e., be partially automated in such a way that functions such as automatic parking, lane keeping or lateral guidance, general longitudinal guidance, acceleration and/or braking are performed by driver assistance systems.

The vehicle may be an autonomy level 3 vehicle, i.e., automated in such a conditional manner that the driver does not need to continuously monitor the system vehicle. The vehicle autonomously performs functions such as triggering the turn signal, changing lanes, and/or lane keeping. The driver can attend to other matters, but is prompted by the system to take over control within a warning time if needed.

The vehicle may be an autonomy level 4 vehicle, i.e., so highly automated that the driving of the vehicle is permanently taken over by the system vehicle. If the driving tasks are no longer handled by the system, the driver may be requested to take over control.

The vehicle may be an autonomy level 5 vehicle, i.e., so fully automated that the driver is not required to complete the driving task. No human intervention is required other than setting the destination and starting the system. The vehicle can operate without a steering wheel or pedals.

Moreover, the description given above with respect to the method and the network applies mutatis mutandis to the vehicle and vice versa.

An embodiment is described with reference to figures land 2 below.
- Fig. 1: shows schematically a communication network of an automated vehicle, wherein the communication network is configured to carry out a method for monitoring a functionality of the communication network, and
- Fig. 2: shows a flowchart of the method carried out by the communication network of figure 1.

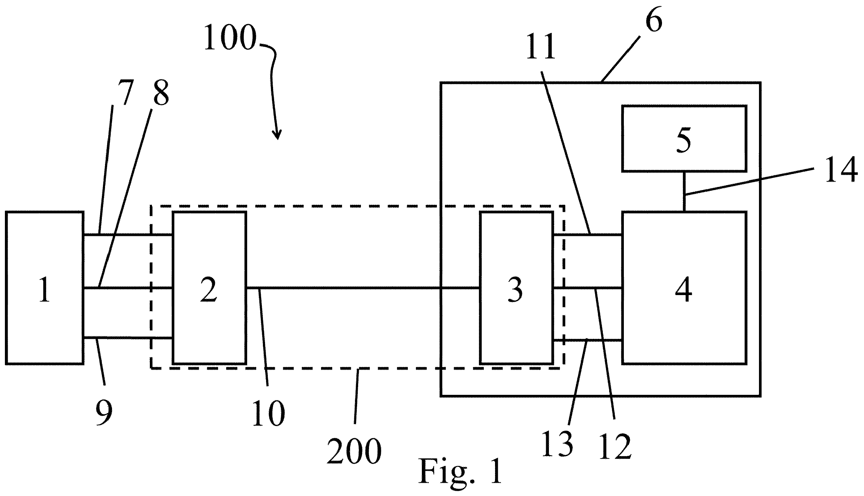

In Figure 1 a communication network 100 of an automated vehicle is shown schematically. The communication network 100 comprises a sensor device 1 connected via a serdes module 200 to a first microcontroller 4. The sensor device 1 comprises an (not shown) image sensor configured to capture image data.

More specifically, the communication network comprises an electronic control unit 6 comprising a deserializer module 3, the first microcontroller 4 and a second microcontroller 5, wherein the deserializer module 3 is connected to the first microcontroller 4 via a sensor data line 11 for sending parallel data to the first microcontroller 4, a serial bus control line 12 for sending and receiving serial data to and from the first microcontroller 4, and an error data line 13 for sending an information about a hardware error occurred in the sensor device 1 and/or the serdes module 200 from the deserializer module 3 to the first microcontroller 4. The first microcontroller 4 is connected via a serial data line/bus 14 to the second microcontroller 5 for sending an information about the hardware error occurred in the sensor device 1 and/or the serdes module 200 from the first microcontroller 4 to the second microcontroller 5. The second microcontroller 5 has a higher automotive safety integrity level than the first microcontroller 4. The second microcontroller 5 is connected to the first microcontroller 4 via a serial peripheral interface.

The communication network 100, more specifically the serdes module 200, comprises besides the deserializer module 3 a serializer module 2 connected to the deserializer module 3 via a serial data line/bus 10 for sending and receiving serial data to and from the deserializer 3. The serializer module 2 is connected to the sensor device 1 via a sensor data line 7 for receiving parallel data from the sensor device 1, a serial bus control line 8 for sending and receiving serial data to and from the sensor device 1, and an error data line 9 for sending an information about a hardware error occurred in the sensor device 1 to the serializer module 2. The serializer module 2 forms part of the sensor device 1.

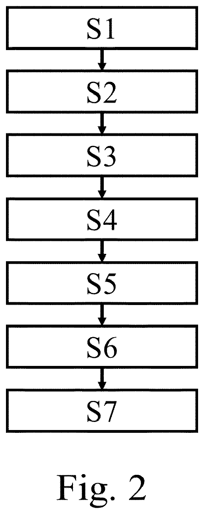

The communication network 100 as described above is configured to carry out a method for safety monitoring of the communication network 100 which will be explained in detail below also with reference to figure 2, wherein figure 2 shows schematically a flowchart of this method.

As can be gathered from figure 2, the method substantially comprises seven steps S1 - S7.

In a first step S1 a first data frame captured by the sensor device 1 is sent from the sensor device 1 via the serdes module 200 to the first microcontroller 4. The first data frame comprises the image data captured by the image sensor of the sensor device 1. More specifically, sending the first data frame captured by the sensor device 1 from the sensor device 1 via the serdes module 200 to the first microcontroller 4 comprises to output the first data frame as parallel data from the sensor device 1 to the serializer module 2 via the sensor data line 7. The serializer module 2 receives the first data frame at the serializer module 2, serializes the received first data frame and sends the serialized first data frame to the deserializer module 3 via the serial data line 10. The deserializer 3 receives the serialized first data frame, deserializes the received serialized first data frame and outputs/sends the deserialzed first data frame to the first microcontroller 4 via the sensor data line 11.

In a third step S3 of the method, the deserializer module 3 sends an information about a hardware error occurred in the sensor device 1 and the serdes module 200 via the error data line 13 to the first microcontroller 4. The information about the hardware error occurred in the sensor device 1 is sent via a (not shown) first pin (e.g., GPIO) to the first microcontroller 4 and the information about the hardware error occurred in the serdes module 200, i.e., in the serializer and/or the deserializer module 2, 3, is sent via a (not shown) second pin (e.g., GPIO) to the first microcontroller 4.

In a third step S3 of the method, the first microcontroller 4 processes the received first data frame. The third step S3 of the method may be performed before, simultaneously to and/or after the second step S2 of the method.

In a fourth step S4 of the method, after the first data frame is fully received at the first microcontroller 4, the first microcontroller 4 performs a safety check triggered by the received information about the hardware error using the serial bus control lines 8, 12 during processing the first data frame. The safety check comprises reading registers of the sensor device 1 and/or the serdes module 200 by the first microcontroller 4 via the serial bus control lines 8, 12 (e.g., I2C) to specify the occurred hardware error. The serial bus control lines 8, 12 use a serial communication protocol (e.g., I2C) and the registers (e.g., I2C registers) are part of a serial communication interface for the serial bus control lines 8, 12. Reading the registers of the sensor device 1 and/or the serdes module 200 using the first microcontroller 4 comprises sending a read request via the serial bus control lines 8, 12 from the first microcontroller 4 to the sensor device 1 and/or the serdes module 200 and sending data stored in the registers of the sensor device 1 and/or the serdes module 200 via the serial bus control lines 8, 12 to the first microcontroller 4 in response to the read request.

In a fifth step S5 of the method, a second data frame captured by the sensor device 1 after the first data frame is sent from the sensor device 1 via the serdes module 200 to the first microcontroller 4 (for details how this is done concretely look at the description given above with respect to step S1 of the method).

In a sixth step S6 of the method, the first microcontroller 4 blocks processing of the received second data frame when, i.e., directly when, the information about the hardware error is received at the first microcontroller or depending on a result of the safety check carried out in the fourth step S4 of the method.

A seventh step S7 of the method comprises reporting the hardware error from the first microcontroller 4 to the second microcontroller 5 via the SPI interface and the serial data line 14, and reporting the hardware error received at the second microcontroller 5 from the second microcontroller 5 to the automated vehicle.

### Reference signs

- 1: sensor device
- 2: serializer module
- 3: deserializer module
- 4: first microcontroller
- 5: second microcontroller
- 6: electronic control unit
- 7: sensor data line
- 8: serial bus control line
- 9: error data line
- 10: serial data line/bus
- 11: the sensor data line
- 12: serial bus control line
- 13: error data line
- 14: serial data line
- 100: communication network
- 200: serdes module
- S1-S7: steps of the method

## Claims

1. Method for safety monitoring of a communication network (100) of an automated vehicle, wherein the communication network (100) comprises a sensor device (1) connected via a serdes module (200) to a first microcontroller (4), wherein the method comprises:
- sending a first data frame captured by the sensor device (1) from the sensor device (1) via the serdes module (200) to the first microcontroller (4),
- processing the received first data frame at the first microcontroller (4),
- sending an information about a hardware error occurred in the sensor device (1) and/or the serdes module (200) from the serdes module (200) to the first microcontroller (4), and
- performing a safety check triggered by the received information about the hardware error using the first microcontroller (4) during processing the first data frame.

2. Method according to claim 1, wherein performing the safety check comprises reading registers of the sensor device (1) and/or the serdes module (200) using the first microcontroller (4) to specify the occurred hardware error.

3. Method according to claim 2, wherein reading the registers of the sensor device (1) and/or the serdes module (200) using the first microcontroller (4) comprises:
- sending a read request via a control channel (8, 12) from the first microcontroller (4) to the sensor device (1) and/or the serdes module (200), and
- sending data stored in the registers of the sensor device (1) and/or the serdes module (200) via the control channel (8, 12) to the first microcontroller (4) in response to the read request.

4. Method according to claim 3, wherein the control channel (8, 12) uses a serial communication protocol and the registers are part of a serial communication interface for the control channel (8, 12).

5. Method according to any of claims 2 to 4, wherein the registers are read after the first data frame is fully received.

6. Method according to any of claims 1 to 5, wherein the method comprises sending a second data frame captured by the sensor device (1) after the first data frame from the sensor device (1) via the serdes module (200) to the first microcontroller (4).

7. Method according to claim 6, wherein the first microcontroller (4) blocks processing of the received second data frame when the information about the hardware error is received at the first microcontroller (4) or depending on a result of the safety check.

8. Method according to any of claims 1 to 7,
- wherein the communication network (100) comprises a second microcontroller (5) connected to the first microcontroller (4), and
- wherein the method further comprises reporting the hardware error from the first microcontroller (4) to the second microcontroller (5).

9. Method according to claim 8, wherein:
- the second microcontroller (5) has a higher automotive safety integrity level than the first microcontroller (4),
- the second microcontroller (5) is connected to the first microcontroller (4) via a serial peripheral interface, and/or
- the method comprises reporting the hardware error received at the second microcontroller (5) from the second microcontroller (5) to the automated vehicle.

10. Method according to any of claims 1 to 9, wherein the information about the hardware error occurred in the sensor device (1) is sent via a first pin to the first microcontroller (4) and the information about the hardware error occurred in the serdes module (200) is sent via a second pin to the first microcontroller (4).

11. Method according to any of claims 1 to 10, wherein sending the first data frame captured by the sensor device (1) from the sensor device (1) via the serdes module (200) to the first microcontroller (4) comprises:
- output the first data frame as parallel data from the sensor device (1) to a serializer module (2) of the serdes module (200),
- receiving the first data frame at the serializer module (2),
- serialize the received first data frame at the serializer module (2),
- send the serialized first data frame from the serializer module (2) to a deserializer module (3) of the serdes module (200),
- deserialize the received serialized first data frame at the deserialzer module (3), and
- output the deserialzed first data frame to the microcontroller (4).

12. Method according to claim 11, wherein the serializer module (2) is part of the sensor device (1) and the deserializer (3) is part of an electronic control unit (6) comprising the first microcontroller (4).

13. Method according to any of claims 1 to 12, wherein the sensor device (1) comprises an image sensor configured to capture image data and the first data frame comprises the image data captured by the image sensor.

14. Communication network (100) for an automated vehicle, wherein the communication network (100) comprises a sensor device (1) connected via a serdes module (200) to a first microcontroller (4), and wherein the communication network (100) is configured to carry out the method according to any of claims 1 to 13.

15. Automated vehicle comprising the communication network (100) according to claim 14.
